# EUROPEAN PATENT SPECIFICATION

(11) **EP 0 994 265 B1**
(45) Date of publication and mention of the grant of the patent: **05.01.2005**
(21) Application number: 99850147.2
(22) Date of filing: 12.10.1999
(51) Int. Cl.: F16C 39/04, F16C 17/20

(54) **Device for limiting a whirl speed of a shaft**
Vorrichtung zur Beschränkung der Taumelgeschwindigkeit einer Welle
Dispositif de limitation de la vitesse de nutation d'un arbre

(30) Priority: 15.10.1998 SE 9803537
(43) Date of publication of application: 19.04.2000
(73) Proprietor: SKF Nova AB, 412 88 Göteborg (SE)
(72) Inventor: Göransson, Bo, 415 06 Göteborg (SE)
(74) Representative: Westman, Per Börje Ingemar

(56) References cited:
- EP-A- 0 287 440
- EP-A- 0 499 309
- EP-A- 0 499 310
- EP-A- 0 584 846

## Description

### FIELD OF INVENTION

The present invention relates to a device for limiting a whirl speed of a shaft after failure of a magnetic bearing, after which failure the shaft is supported by at least one auxiliary bearing.

### BACKGROUND OF THE INVENTION

An object of an auxiliary bearing is to support a shaft during failure of an associated magnetic bearing. When a magnetic bearing fails, the rotating shaft comes in contact with the inside of the inner ring of the auxiliary bearing, which leads to an acceleration of the inner ring of the bearing. These contacts affects the shaft resulting in the frictional forces. The shaft starts to whirl in the clearence between the shaft and the inner ring of the auxiliary bearing. The friction forces are directed to increase the whirling speed until the auxiliary bearing has accelerated almost to the speed of the rotating shaft. The resulting whirl speed causes a centrifugal force which can be 30-50 times the force of a synchronous whirl equal to the shaft speed would have caused. The limited contact area and cooling area often also cause temperature problems.

In EP-0 499 310 A1 a magnetic bearing-shaft assembly having a bearing to support the shaft in the event of failure of the magnetic bearing is presented. If the bearing portion of the back-up bearing comprises a ball race, the radially outer raceway thereof is secured to an anchorage, such as a housing for the assembly. A low stiffness damper member in the form of a annular shaped body of resilient material is also included in the back-up bearing, between the bearing portion thereof and the anchorage. Advantageously, when the magnetic bearing has failed, and the shaft is being brought to rest by being in contact with the back-up bearing, the resilient body is in shear, and the body has a lower stiffness than otherwise would be the case. Thus, any tendency for the back-up bearing, and/or the anchorage, to be damaged whilst the shaft is being brought to rest, is reduced, because the provision of the low stiffness damper causes the shaft to have a low natural frequency of oscillation. It should be noted that a crucial part of the assembly is constituted by the stiffness damper member.

### THE TECHNICAL PROBLEM

The present invention deals with the problem of limiting a whirl movement of a rotatory shaft after a failure of a magnetic bearing and during the deceleration of the rotatory shaft. The problem with whirl is mainly accentuated in the case of a vertical shaft.

### THE PURPOSE OF THE INVENTION AND ITS MOST CHARACTERIZING PARTS

A primary object of the present invention is to offer a device which decreases the whirling motion of a shaft during a failure of a magnetic bearing. Characteristics of the present invention are the device comprising a disk-like portion provided with an outer perimeter surface and a hole with an inner perimeter surface, at least one of the perimeter surfaces being designed with a varying distance in circumferential direction to the rotational center of the portion, the device being arranged between the shaft and the circular element, the circular element and the projecting element being positioned in a common plane perpendicular to an axis of the shaft, and the device operating as a whirl speed limiting mechanism causing a contribution to the whirl velocity at impact between any of the projecting element, the device, the circular element and the shaft.

### DESCRIPTION OF THE DRAWINGS

Figure 1 shows an embodiment of a device according to the present invention, in which the device consists of a disk-like portion provided with an outer perimeter surface and a hole with an inner perimeter surface.
Figure 2 shows an embodiment of a device according to the present invention in its operative environment.
Figure 3 shows an embodiment of a device according to the present invention, comprising an asymmetric ring.
Figure 4 shows an embodiment of a device according to the present invention in its operative environment, in which interacting surfaces are provided with conical surfaces.

### DESCRIPTION OF PREFERRED EMBODIMENTS

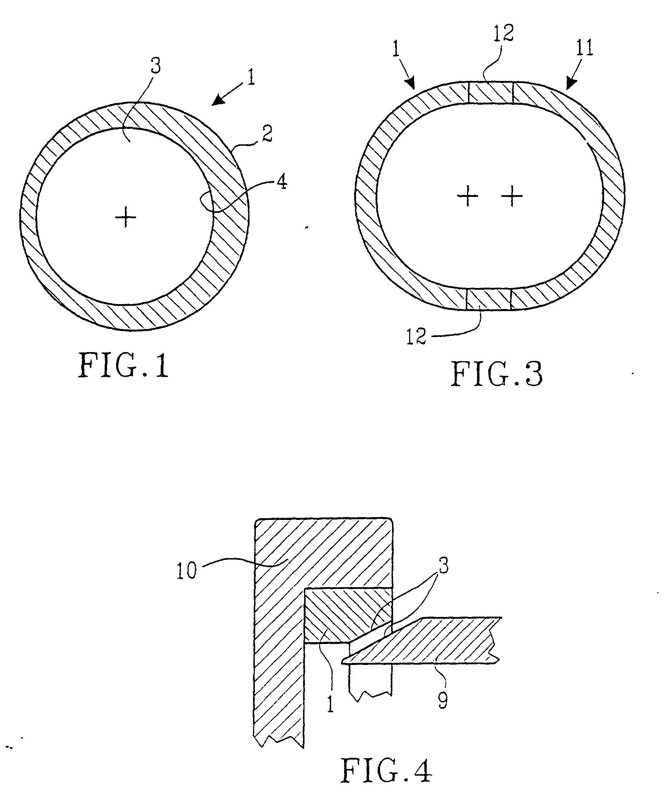

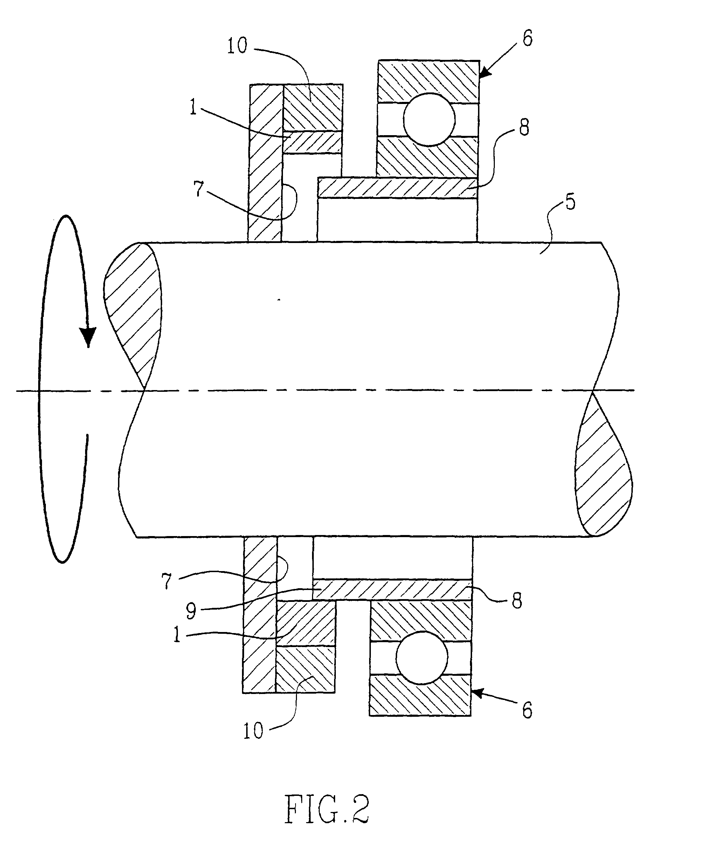

Figure 1 shows a preferred embodiment of a device 1 according to the present invention. The device 1 consists of a disk-like portion provided with an outer perimeter surface 2 and a hole 3 with an inner perimeter surface 4. The disk-like portion can be arranged in different locations in order to accomplish the purpose of the present invention. One of these ways is presented in figure 2, in which a device 1 for limiting a whirl speed of a shaft 5 after failure of a magnetic bearing is presented. After such a failure the shaft 5 is normally supported by at least one auxiliary bearing 6. The present invention is primarily intended to deal with vertical shafts, but the scope of the appended claims encompasses arbitrary shaft arrangements. The shaft 5 is provided with a surface 7 extending essentially radially from the shaft 5 and a machine element 8 is provided with a projecting element 9 extending from the machine element 8 in direction towards the surface 7. The surface 7 is provided with at least one circular element 10 concentrical with the axis of the shaft 5 on the side facing the projecting element 9. Further, the device 1 comprises a disk-like portion as described in figure 1. At least one of the perimeter surfaces 2, 4 is designed with a varying distance in circumferential direction to the rotational center of the portion. The device 1 is arranged between the shaft 5 and the circular element 10 and the circular element 10 and the projecting element 9 is positioned in a common plane perpendicular to an axis of the shaft 5. The device 1 is arranged to operate as a whirl speed limiting mechanism causing a contribution to the whirl velocity at impact between any of the projecting element 9, the device 1, the circular element 10 and the shaft 5. In this preferred embodiment, the whirl speed is given a contribution when the projecting element 9 comes in contact with either the shaft 5 or the device 1. Thus, it is crucial to the function of this embodiment, that the projecting element 9 is arranged to be able to come in contact with the shaft 5 and the device 1. The present invention is based on the two possibilities of obtaining contact between the rotating parts (e.g. shaft 5) and the initially non rotating parts (e.g. projecting element 9). One of these possibilities results in a decreased whirl velocity and the other in an increased whirl velocity. The purpose of the present invention is obtained by the sequence of consecutive contacts of the above described type.

As mentioned above, there are different locations possible for arranging the device 1 in its operative environment. It should be noted that it is possible to arrange a device 1 on one or more of these locations. The device 1 can be fixedly arranged to one of the surfaces either between an outer circular element 10 and the outside of the projecting element 9, or between the shaft 5 and the inside of the projecting element 9. In this first embodiment, the device 1 is arranged to the inside of a circular element 10 and the machine element 8 is constituted by the inner ring of the auxiliary bearing 6. As the shaft whirls, collisions appear randomly either between the inside of the device 1 and the outside of the projecting element 9, or between the shaft 5 and the inside of the projecting element 9. It should be noted that the projecting element 9 may be integrally manufactured with the inner ring of the auxiliary bearing 6. If the shaft 5 comes in contact with the inside of the projecting element 9 then there will be a negative contribution to the whirl velocity. In the other case, there will be a positive contribution to the whirl velocity. Thus, the whirl speed is limited. The whirl speed is the modulus of the whirl velocity. It should be noted that it is possible to use a plurality of devices 1 on several of the participating parts which are relevant for obtaining the purpose of the invention instead of one, since a key feature of the present invention is related to the asymmetrical relation between the parts.

It is also possible that the projecting element 9 is arranged to engage with a free end of a shaft 5. In such a case, the projecting element 9 is arranged to engage between two concentrical circular elements 10, between which a device 1 according to the present invention is preferably arranged. Alternatively, the device 1 may be arranged on the projecting element 9.

It should be noted that the ring-like portion can be reduced in its circumferential extent to at least two angular segments suitably arranged in circumferential direction. The object of the segments, which may resemble a fork, is to act as a mechanism for contributing to the whirl velocity. In the case of two angular segments, they are preferably arranged 90 degrees apart in angular direction.

In figure 3, a second preferred embodiment of the present invention is presented. The means causing the desired eccentricity of the device 1 incorporates an asymmetric ring produced from a ring member which has been severed at two points, whereupon the severed ends have been displaced tangentially to form a space between them, and separate members 12 being fixedly connected between the severed ends. Needless to say, the ring member can be severed at a plurality of points. An alternative way of realizing the present invention is to incorporate a ring, which is eccentrically arranged in relation to the center of rotation. Another way of accomplishing the effect is to use an ellipse.

A difference between the embodiments presented in figures 3 and 4 is that the embodiment presented in figure 3 is designed for two contacts per revolution for the purpose of faster limiting of the whirl compared to only one in the embodiment presented in figure 2. Also, it is possible to design the contacting parts so that there will be even more contacts per revolution.

In order to limit the movement in axial direction, the projecting element 9 is arranged to be able to contact the surface 7. A contact between the surface 7 and the projecting element 9 limits the axial movement.

Also, in order to prolong the operation of the bearing, at least one of the surfaces of the projecting element 9, the device 1, the circular element 10, the surface 7 and the shaft 5 are arranged with friction decreasing means, the purpose of which is to increase the service life by decreasing wear and friction and to extend the bearing speed-up time and thereby reduce the peak temperature and bearing clearing changes.

Due to the asymmetrical features of the present invention as described in figure 2, the arrangement needs to be properly balanced. Balance can be achieved in a plurality of ways. One way is to provide balancing means on the radial outside of the circular element 10. Another way could be to arrange holes in the element 10. Several balancing options relevant in this context are available to the man skilled in the art.

The present invention can be integrally manufactured in different ways. Examples are that the shaft 5 and the member to which the surface 7 is arranged are integrally manufactured. The asymmetric ring 11 can be integrally manufactured to the surface 7 and the circular element 10 and the device 1 can be integrally manufactured. Also, the device 1 is integrally manufactured to one of the radial surfaces of the projecting element 9, and the device 1 is integrally manufactured to the shaft 5.

In figure 4, a third embodiment is disclosed. Since there are similarities between the first embodiment presented in figure 2 and this one, only differences will discussed. In order to be able to support the shaft 5 in axial direction after failure of the magnetic bearing, the interacting surfaces of the projecting element 9, the device 1, the circular element 10 or the shaft 5 are arranged with mating portions 13. The purpose of the these portions 13 is to act as a movement limiting mechanism in one axial direction. However, it is possible to arrange mating portions so that the movement limiting mechanism operates in both directions by introducing concave/convex mating portions.

## Claims

1. Device (1) for limiting a whirl speed of a shaft (5) after failure of a magnetic bearing, after which failure the shaft (5) is supported by at least one auxiliary bearing, the shaft (5) being provided with a surface (7) extending essentially radially from the shaft (5), a machine element (8) being provided with a projecting element (9) extending from the machine element (8) in direction towards the surface (7), the surface (7) being provided with at least one circular element (10) concentrical with the axis of the shaft (5) on the side facing the projecting element (9),
**characterized by,**
- the device (1) comprising a disk-like portion provided with an outer perimeter surface (2) and a hole (3) with an inner perimeter surface (4),
- at least one of the perimeter surfaces (2, 4) being designed with a varying distance in circumferential direction to the rotational center of the portion,
- the device (1) being arranged between the shaft (5) and the circular element (10),
- the circular element (10) and the projecting element (9) being positioned in a common plane perpendicular to an axis of the shaft (5), and
- the device (1) operating as a whirl speed limiting mechanism causing a contribution to the whirl velocity at impact between any of the projecting element (9), the device (1), the circular element (10) and the shaft (5).

2. Device according to claim 1,
**characterized by,**
it being arranged between the shaft (5) and the inside of the projecting element (9).

3. Device according to claim 1,
**characterized by,**
it being arranged between the inside of the circular element (10) and the outside of the projecting element (9).

4. Device according to claim 1,
**characterized by,**
the reduction of the device (1) to at least two angular segments suitably arranged in circumferential direction, the segments acting as a mechanism for contributing to the whirl speed.

5. Device according to claim 1,
**characterized by,**
the device (1) incorporating a ring, which is eccentrically arranged in relation to the center of rotation.

6. Device according to claim 1,
**characterized by,**
the device (1) being an asymmetric ring produced from a ring member which has been severed at at least one point, whereupon the severed ends have been displaced tangentially to form a space between them, and at least one separate member (12) being fixedly connected between the severed ends.

7. Device according to claim 1,
**characterized in,**
**that** the interacting surfaces of the projecting element (9), the device (1), the circular element (10) or the shaft (5) are arranged with mating portions (13) in order to act as a movement limiting mechanism in axial direction.

8. Device according to claim 1,
**characterized in,**
**that** the machine element (8) is constituted by the inner ring of the auxiliary bearing (6).

9. Device according to claim 1,
**characterized in,**
**that** the projecting element (9) is arranged to be able to contact the surface (7) in order to limit movement in axial direction.

10. Device according to claim 1,
**characterized in,**
**that** at least one of the surfaces of the projecting element (9), the device (1), the circular element (10), the surface (7) and the shaft (5) are arranged with friction decreasing means.

11. Device according to claim 1,
**characterized in,**
**that** the shaft (5) and the member to which the surface (7) is arranged are integrally manufactured.

12. Device according to claim 1,
**characterized in,**
**that** the asymmetric ring (10) is integrally manufactured to the surface (7).

13. Device according to claim 1,
**characterized in,**
**that** the circular element (10) and the device (1) are integrally manufactured.

14. Device according to claim 1,
**characterized in,**
**that** the device (1) is integrally manufactured to one of the radial surfaces of the projecting element (9).

15. Device according to claim 1,
**characterized in,**
**that** the device (1) is integrally manufactured to the shaft (5).

## Patentansprüche

1. Vorrichtung zum Beschränken der Taumeldrehzahl einer Welle (5) nach dem Ausfall eines Magnetlagers, wobei nach dem Ausfallen die Welle (5) durch wenigstens ein Hilfslager abgestützt ist, die Welle (5) mit einer sich im wesentlichen radial von der Welle erstreckenden Oberfläche (7) versehen ist, ein Maschinenelement (8) mit einem vorstehenden Element (9) versehen ist, das sich von dem Maschinenelement (8) in eine Richtung zu der Oberfläche (7) hin erstreckt, und die Oberfläche (7) auf der dem vorstehenden Element (9) zugewandten Seite mit wenigstens einem kreisförmigen Element (10) konzentrisch zu der Achse der Welle (5) versehen ist, **dadurch gekennzeichnet, daß** die Vorrichtung (1) einen scheibenähnlichen Teil aufweist, der mit einer äußeren Umfangsfläche (2) und einem Loch (3) mit einer inneren Umfangsfläche (4) versehen ist, wenigstens eine der Umfangsflächen (2, 4) mit einem sich verändernden Abstand in Umfangsrichtung zu dem Rotationszentrum des Teils ausgebildet ist, die Vorrichtung (1) zwischen der Welle (5) und dem kreisförmigen Element (10) angeordnet ist, das kreisförmige Element (10) und das vorstehende Element (9) in eine gemeinsame Ebene senkrecht zu einer Achse der Welle (5) reichen und die Vorrichtung (1) als ein die Taumeldrehzahl beschränkender Mechanismus arbeitet, der einen Beitrag zur Taumelgeschwindigkeit bei einem Aneinanderprallen zwischen irgendwelchen Teilen - dem vorstehenden Element (9), der Vorrichtung (1), dem ringförmigen Element (10) und der Welle (5) - bewirkt.

2. Vorrichtung nach Anspruch 1, **dadurch gekennzeichnet, daß** sie zwischen der Welle (5) und der Innenseite des vorstehenden Elements (9) angeordnet ist.

3. Vorrichtung nach Anspruch 1, **dadurch gekennzeichnet, daß** sie zwischen der Innenseite des kreisförmigen Elements (10) und der Außenseite des vorstehenden Elements (9) angeordnet ist.

4. Vorrichtung nach Anspruch 1, **gekennzeichnet durch** eine Reduktion der Vorrichtung (1) auf wenigstens zwei Winkelsegmente, die in Umfangsrichtung angeordnet sind, wobei die Segmente als ein Mechanismus zum Leisten eines Beitrages für die Taumeldrehzahl wirken.

5. Vorrichtung nach Anspruch 1, **dadurch gekennzeichnet, daß** die Vorrichtung (1) einen Ring umfaßt, der mit Bezug auf das Rotationszentrum exzentrisch angeordnet ist.

6. Vorrichtung nach Anspruch 1, **dadurch gekennzeichnet, daß** die Vorrichtung (1) ein asymmetrischer Ring ist, der aus einem Ringelement hergestellt ist, das an wenigstens einer Stelle aufgetrennt worden ist, woraufhin die aufgetrennten Enden tangential verlagert worden sind, um einen Raum zwischen ihnen zu bilden, und wenigstens ein separates Element (12) fest zwischen den aufgetrennten Enden angebracht ist.

7. Vorrichtung nach Anspruch 1, **dadurch gekennzeichnet, daß** die zusammenwirkenden Oberflächen des vorstehenden Elements (9), der Vorrichtung (1), des kreisförmigen Elements (10) oder der Welle (5) mit passenden Bereichen (13) ausgebildet sind, um als ein die Bewegung begrenzender Mechanismus in axialer Richtung zu wirken.

8. Vorrichtung nach Anspruch 1, **dadurch gekennzeichnet, daß** das Maschinenelement (8) durch den Innenring des Hilfslagers (6) gebildet ist.

9. Vorrichtung nach Anspruch 1, **dadurch gekennzeichnet, daß** das vorstehende Element (9) so angeordnet ist, daß es die Oberfläche (7) berühren kann, um die Bewegung in Axialrichtung zu begrenzen.

10. Vorrichtung nach Anspruch 1, **dadurch gekennzeichnet, daß** wenigstens eine der Oberflächen des vorstehenden Elements (9), der Vorrichtung (1), des kreisförmigen Elements (10), der Oberfläche (7) und der Welle (5) mit reibungsmindernden Mitteln ausgebildet ist.

11. Vorrichtung nach Anspruch 1, **dadurch gekennzeichnet, daß** die Welle (5) und das Element, an welchem die Oberfläche (7) ausgebildet ist, integral gefertigt sind.

12. Vorrichtung nach Anspruch 1, **dadurch gekennzeichnet, daß** der asymmetrische Ring (10) integral mit der Oberfläche (7) hergestellt ist.

13. Vorrichtung nach Anspruch 1, **dadurch gekennzeichnet, daß** das kreisförmige Element (10) und die Vorrichtung (1) integral gefertigt sind.

14. Vorrichtung nach Anspruch 1, **dadurch gekennzeichnet, daß** die Vorrichtung (1) integral an einer der Radialflächen des vorstehenden Elements (9) hergestellt ist.

15. Vorrichtung nach Anspruch 1, **dadurch gekennzeichnet, daß** die Vorrichtung (1) integral mit der Welle (5) hergestellt ist.

## Revendications

1. Dispositif (1) servant à limiter une vitesse de rotation d'un arbre (5) après une défaillance d'un palier magnétique, suite à laquelle l'arbre (5) est supporté par au moins un palier auxiliaire, l'arbre (5) étant muni d'une surface (7) qui s'étend essentiellement radialement depuis l'arbre (5), un élément (8) de machine étant muni d'un élément saillant (9) qui s'étend depuis l'élément (8) de machine en direction de la surface (7), la surface (7) étant munie d'au moins un élément circulaire (10) concentrique à l'axe de l'arbre (5) sur le côté tourné vers l'élément saillant (9),
**caractérisé en ce que** :
- le dispositif (1) comprend une partie en forme de disque munie d'une surface périmétrique extérieure (2) et un trou (3) ayant une surface périmétrique intérieure (4),
- au moins l'une des surfaces périmétriques (2, 4) est dessinée de manière à avoir une distance variable dans la direction circonférentielle au centre de rotation de la partie,
- le dispositif (1) est placé entre l'arbre (5) et l'élément circulaire (10),
- l'élément circulaire (10) et l'élément saillant (9) sont positionnés dans un plan commun perpendiculaire à l'axe de l'arbre (5), et
- le dispositif (1) fonctionne comme mécanisme de limitation de la vitesse de rotation qui apporte une contribution à la vitesse de rotation lors d'un choc entre n'importe quel élément parmi l'élément saillant (9), le dispositif (1), l'élément circulaire (10) et l'arbre (5).

2. Dispositif selon la revendication 1, **caractérisé en ce qu'**il est placé entre l'arbre (5) et l'intérieur de l'élément saillant (9).

3. Dispositif selon la revendication 1, **caractérisé en ce qu'**il est placé entre l'intérieur de l'élément circulaire (10) et l'extérieur de l'élément saillant (9).

4. Dispositif selon la revendication 1, **caractérisé par** la réduction du dispositif (1) à au moins deux segments angulaires agencés de façon adaptée dans la direction circonférentielle, les segments agissant comme mécanisme contribuant à la vitesse de rotation.

5. Dispositif selon la revendication 1, **caractérisé en ce que** le dispositif (1) comporte une bague qui est placée de façon excentrée par rapport au centre de rotation.

6. Dispositif selon la revendication 1, **caractérisé en ce que** le dispositif (1) est une bague asymétrique produite à partir d'un organe formant bague qui a été coupé en au moins un point, après quoi les extrémités coupées ont été déplacées tangentiellement pour former un espace entre elles, et au moins un organe séparé (12) est connecté de manière fixe entre les extrémités coupées.

7. Dispositif selon la revendication 1, **caractérisé en ce que** les surfaces en interaction de l'élément saillant (9), du dispositif (1), de l'élément circulaire (10) ou de l'arbre (5) sont agencées avec des parties d'accouplement (13) afin d'agir comme mécanisme de limitation du mouvement dans la direction axiale.

8. Dispositif selon la revendication 1, **caractérisé en ce que** l'élément (8) de machine est constitué par la bague intérieure du palier auxiliaire (6).

9. Dispositif selon la revendication 1, **caractérisé en ce que** l'élément saillant (9) est adapté pour être apte à toucher la surface (7) afin de limiter le mouvement dans la direction axiale.

10. Dispositif selon la revendication 1, **caractérisé en ce qu'**au moins l'une des surfaces de l'élément saillant (9), du dispositif (1), de l'élément circulaire (10), de la surface (7) et de l'arbre (5) sont agencées avec un moyen réduisant les frottements.

11. Dispositif selon la revendication 1, **caractérisé en ce que** l'arbre (5) et l'organe sur lequel est agencée la surface (7) sont fabriqués d'un seul tenant.

12. Dispositif selon la revendication 1, **caractérisé en ce que** la bague asymétrique (10) est fabriquée d'un seul tenant avec la surface (7).

13. Dispositif selon la revendication 1, **caractérisé en ce que** l'élément circulaire (10) et le dispositif (1) sont fabriqués d'un seul tenant.

14. Dispositif selon la revendication 1, **caractérisé en ce que** le dispositif (1) est fabriqué d'un seul tenant avec l'une des surfaces radiales de l'élément saillant (9).

15. Dispositif selon la revendication 1, **caractérisé en ce que** le dispositif (1) est fabriqué d'un seul tenant avec l'arbre (5).
